# EUROPEAN PATENT SPECIFICATION

(11) **EP 4 184 160 B1**
(45) Date of publication and mention of the grant of the patent: **30.07.2025**
(21) Application number: 22207429.6
(22) Date of filing: 15.11.2022
(51) Int. Cl.: G01N 29/11, G01N 29/32, G01N 29/40

(54) **AUTO-ADJUSTING ANALOG ULTRASONIC SENSOR**
SELBSTEINSTELLENDER ANALOGER ULTRASCHALLSENSOR
CAPTEUR ULTRASONORE ANALOGIQUE À RÉGLAGE AUTOMATIQUE

(30) Priority: 18.11.2021 US 202117530249
(43) Date of publication of application: 24.05.2023
(73) Proprietor: U.E. Systems, Inc., Elmsford, New York 10523 (US)
(72) Inventor: BISHOP, William, Pleasantville, New York 10570 (US); MOHR, Gary, Cortlandt Manor, New York 10567 (US)
(74) Representative: Gleim Petri Patent- und Rechtsanwaltspartnerschaft mbB

(56) References cited:
- GB-A- 2 358 470
- JP-A- H02 218 353
- JP-A- H02 218 363
- US-A1- 2017 215 841
- US-A1- 2020 296 513
- BHATTARU PURNENDU ET AL: "A 36dB Gain Range, 0.5dB Gain Step Variable Gain Amplifier with 10 to 25MHz Bandwidth Third-Order Filter for Portable Ultrasound Systems", 2020 33RD INTERNATIONAL CONFERENCE ON VLSI DESIGN AND 2020 19TH INTERNATIONAL CONFERENCE ON EMBEDDED SYSTEMS (VLSID), IEEE, 4 January 2020 (2020-01-04), pages 96 - 100, XP033776309, DOI: 10.1109/VLSID49098.2020.00034

## Description

### Cross Reference to Related Patent Applications

The present application is a continuation-in-part of US Patent Application Serial No. 17/131,523 filed December 22, 2020 and entitled Globally-Based Automatic Lubrication System.

### Field of the Invention

The present invention relates generally to the receipt of ultrasonic signals as a means for the detecting mechanical faults and, more particularly, to a sensor for an ultrasonic detection system that automatically adjusts its dynamic range in response to the amplitude of the received ultrasonic signal.

### Background of the Invention

GB 2358470 A relates to an ultrasonic defect monitoring device for pipes.

Ultrasonic sensors have been used to detect ultrasonic energy generated by friction within mechanical devices, such as that created by deteriorated bearings, as disclosed in U.S. Patent No. Re. 33,977 to Goodman, et al., the contents of which are hereby incorporated herein by reference in its entirety. The greater the amount of friction, the greater is the intensity of the generated ultrasonic energy. Applying a lubricant to the device reduces friction and consequently the intensity of the generated ultrasound drops. Measuring ultrasonic energy thus provides a way to determine when lubrication has reached the friction generating surfaces. Additionally, faulty devices, such as bearings, generate a higher level of ultrasonic energy than do good bearings and thus, this condition can also be detected.

Not only can under-lubrication quickly lead to bearing damage from increased friction, over lubrication can also be a problem. Over-lubrication can increase heat, damage bearing seals, and/or contaminate motor windings.

As indicated in US Patent No. 6,996,030 of Goodman et al. (which is incorporated herein by reference in its entirety) ultrasonic transducers generally produce a low voltage output in response to received ultrasonic energy. Thus, it is necessary to amplify the detected signal using a high-gain preamplifier before it can be accurately processed. However, if low cost heterodyning and display circuitry are to be used, means must be made available to attenuate the amplified signal to prevent saturating these circuits when high input signals are present. This attenuation also adjusts the sensitivity of the device. In such devices in the prior art the degree of attenuation is manually selectable by the user. For example, U.S. Pat. No. 4,785,659 to Rose et al. discloses an ultrasonic leak detector with a variable resistor attenuator used to adjust the output level of an LED bar graph display. Patent No. 6,996,030 of Goodman (Goodman '030) has an amplifier controlled sensitivity setting such that the overall sensitivity of the system is determined by a micro-controller, whereby an operator using a dial on a front panel of the instrument can adjust the overall sensitivity. As a result, if the sensitivity of the system is lowered by a predetermined level, a clipped (saturated) signal output from the amplifier is toggled such that gain switching occurs at the transducer pre-amp and at a variable gain amplifier.

The Goodman '030 patent discloses a sensitivity encoder 100 that is used to increase or decrease the sensitivity level of a dual heterodyne circuit. The sensitivity is adjusted by turning a rotational knob that is located at the back of the housing. In preferred embodiments, the sensitivity encoder is a rotational optical encoder, whose rotation changes the output level of the control voltage that controls the gain of the amplifier so as to produce proportional changes in the sensitivity level of the dual heterodyne circuit.

US Patent 8,745,768 of Goodman and US Patent No. 9,200,979 of Goodman (which are incorporated herein by reference in their entirety) disclose a front end CPU that is a sub-processor that carriers out detailed instructions from a main CPU to set the sensitivity and frequency in response to operator selection at a touch screen as interpreted by the main CPU.

As indicated in the parent application of this application, i.e., Serial No. 17/131,523, when the ultrasonic signal from a sensor is provided to an analog front end circuit, it can be buffered and conditioned. This front end circuit can also have a dynamic range adjustment to set its gain based on the amplitude of the base ultrasonic signal, so the control unit does not have to be modified for the ultrasonic signal level of different bearings. The prior art manually adjustable sensitivity range where typically 40 dB.

An auto-adjusting analog ultrasonic sensor that accomplishes this gain adjustment function without manual intervention would be of great benefit in the art. Where the sensor is remote, manual adjustment of its sensitivity in view of changing circumstances (a sudden large ultrasonic signal) is not practical.

### Summary of the Invention

The invention is defined by the independent claims 1, 3 and 4.

The present invention is an analog ultrasonic sensor with an automatic sensitivity adjustment. It can operate continuously unattended. The sensor has an enhanced dynamic range, essentially making it more sensitive and thus useable for difficult applications that could only be addressed with handheld devices where the user is available to manually adjust the sensitivity, as opposed to situations where the user is remote. Along with the extra sensitivity, this sensor of the present invention is able to control the attenuation or simply turn it down when needed.

The situation can be complicated where a lower power consumption is needed, e.g. on battery operated devices. This lower power consumption also lowers the dynamic range at any single setting. The prior art handheld devices had a couple of methods to adjust the sensitivity, but they required user intervention. The present invention is a sensor that self-adjusts its own sensitivity with no intervention from the user. This is a huge benefit when applying it to the field of remote sensing, including bearing fault detection, valve leakage and steam trap issues.

The auto-sensitivity adjustment feature enables users to automatically tune into bearing sound and clearly identify lubrication and health issues at speeds as low as 1 RPM and to trap sound so as to clearly identify leaking or blowing traps and valves. The automatic sensitivity adjustment is from 0 dB to 100 dB, and may be extendable to 120dB.

The auto-sensitive sensor passively senses ultrasounds produced by mechanical equipment in the form of friction, impacting and turbulence, and processes the level of decibels into an analog signal that works seamlessly with existing PLC's, SCADA, DCS and other automation systems. This, in turn, supports real-time data trending and alerting, making it possible to detect and address important issues earlier and faster. The sensor also employs Edge Analytics - allowing for in-device data processing, less reliance on cloud computing, and the ability to act on information in real-time.

In an exemplary embodiment the ultrasound is detected by the ultrasonic transducer and conditioned by an analog front end variable gain amplifier. The output of the analog front end ultrasound is fed to the input of heterodyne circuitry and simultaneously into one channel of a processor's analog-to-digital converter. The processor generates a configurable carrier signal for the heterodyne circuit's mixer with a frequency range of 20 kHz to 100 kHz, which is used to perform analog amplitude modulation (heterodyning).

The processor monitors the digitized amplitude level of both the ultrasound and the audio and automatically adjusts the sensitivity (the gain) of the analog front end preamplifier if the digitized amplitude level is out of range. This is called "auto sensitivity adjustment."

An auto sensitivity adjustment algorithm determines whether the signal is saturating, or above the threshold, which can keep it from making accurate decibel calculations. The processor calculates a lower sensitivity setting to bring the ultrasonic signal to within an acceptable working range. Conversely, if the ultrasonic signal is determined to be too low to make an accurate decibel calculation, the auto sensitivity algorithm calculates a higher sensitivity setting to bring the ultrasonic signal to within an acceptable working range. When the ultrasound and/or the audio is in an acceptable working range, the processor will calculate the ultrasound amplitude dB value and the audio amplitude dB value.

In addition to calculating sensitivity, the processor may perform fast Fourier transfer (FFT) calculations and/or execute other digital signal processing algorithms. The processor provides dB and data outputs by means of digital-to-analog converters and communication ports and protocols.

The sensor techniques include generation of a configurable carrier signal, performing digital amplitude modulation with the configurable carrier frequency and the digitizing of the amplitude of the ultrasound, and extracting the digital heterodyned audio spectrum digital audio produced by the digital AM modulation. The processor also has the ability perform FFT, or use other analysis algorithms on the ultrasound and/or the heterodyned ultrasound audio signal.

The sensor provides enhanced signal processing capabilities for the detected ultrasound or heterodyned ultrasound signals, such as spurious glitch detection and/or filtering, fast or slow peak detection, and other advanced pattern recognition capabilities that allow for the detection, processing, and/or reporting of specific events. In addition, the ability of the sensor to self-adjust its range typically gives the device a 100 dB range, and may even have up to a 120 dB range. Many times the input ultrasound signal would fluctuate outside of the typical 40dB range of the prior art. This made it difficult for the operator to try to manually set the sensor in the correct range. This difficulty is eliminated by the present invention.

The analog output signal is a continuous linear analog output, across the full range of sensitivity, proportional to the dB (decibel) value of the ultrasound and/or the heterodyned ultrasound audio signal amplitudes. The sensor can provide FFT data, and temperature measurements, heterodyned audio, and digital signal processing data outputs.

### Brief Description of the Drawings

The foregoing and other objects and advantages of the present invention will become more apparent when considered in connection with the following detailed description and appended drawings in which like designations denote like elements in the various views, and wherein:
FIG. 1 is an image of the auto-adjusting analog ultrasonic sensor of the present invention mounted on a motor with bearings that are being checked.;
FIG. 2 is a block diagram of the auto-adjusting circuit of the present invention; and
FIG. 3 is a flow chart of the auto sensitivity adjustment algorithm operation of the circuit of FIG. 2.

### Detailed Description of the Invention

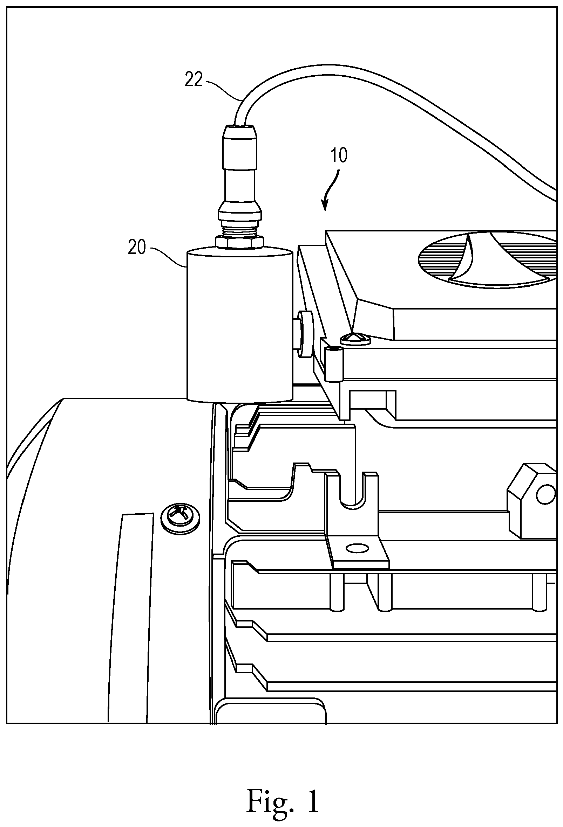

In one embodiment of the present invention there are organizations responsible for maintenance at large factories spread out over acres of land. Such factories frequently contain numerous motors, each having at least one set of bearings. Fig. 1 shows a portion of one such motor 10.

According to the present invention, an auto-adjusting analog ultrasonic sensor or detectors 20 is located on the housing of the motor 10 in which the bearings are located by means of a solid sensor mounting stud. These detectors are contact sensors, and each provides an ultrasonic signal with information about the status of the associated bearing. A lubrication source (not shown) is mounted within a local controller (not shown) and is connected to the bearing through a lubrication tube (not shown) that passes lubrication to a grease fitting on the housing. The bearing information is passed through wires in cable 22 to the local controller. Based on the level of ultrasound detected by the sensor above normal levels, the local controller causes lubricant to be automatically injected through the lubrication tube (not shown) into the bearings grease fitting (not shown) until the ultrasound level returns to normal. A typical single point lubricator may contain, e.g., 250 cc of lubricant. A microprocessor-controlled, energy efficient motor in the local controller can be used to drive a pump or piston to deliver lubricant (e.g., grease) to the bearings with precision.

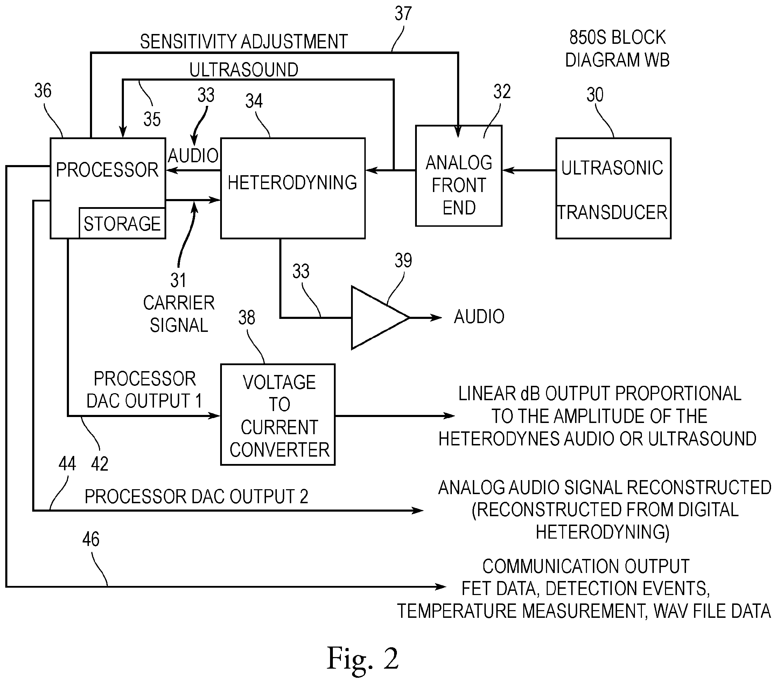

As shown in FIG. 2, the ultrasonic sensor 20 includes at least one transducer 30 that picks up an ultrasonic signal from the bearings and passes it to an analog front end variable gain amplifier 32, which converts it into an amplified ultrasonic voltage signal. The signal is mixed in a heterodyne circuit 34 with a carrier signal 31 from a processor 36, which carrier signal may have a frequency range of 20 kHz to 100 kHz, The heterodyne circuit 34 includes a low pass filter that extracts the audio spectrum signal 33 from the modulated signal's spectrum. The audio signal 33 is equivalent to the ultrasonic signal, but shifted in frequency to the audio range. The audio signal 33 is sent both to a separate analog-to-digital converter channel of the processor 36 and to an amplifier 39, where it is used elsewhere. Also, the ultrasound signal 35 is sent directly to the processor, which has the ability to digitally heterodyne the ultrasonic signal, if required.

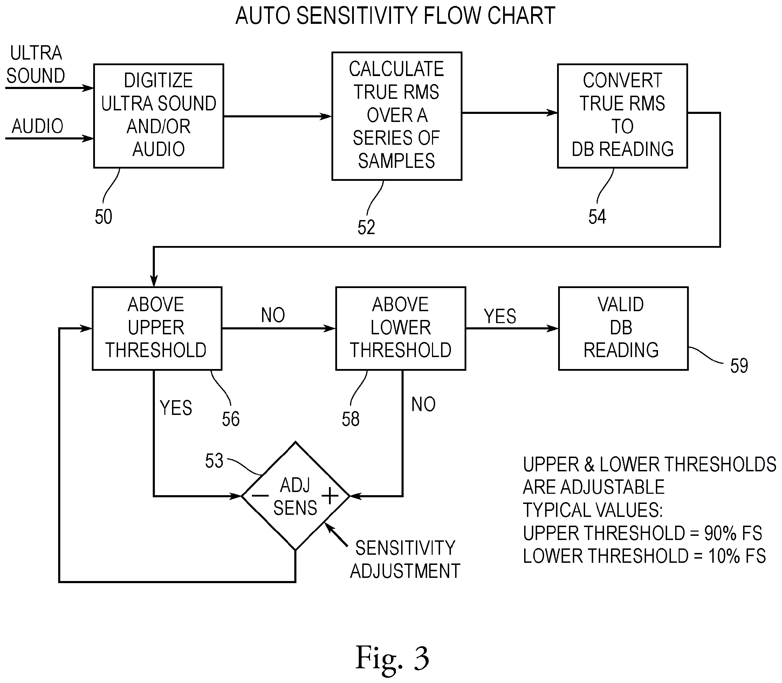

The processor 36 makes a determination about the amplitude of the audio signal based on the minimum signal the sensor can detect and generates a sensitivity adjustment signal 37 based on an "auto sensitivity adjustment algorithm." As shown in the flow chart of FIG. 3. The sensitivity adjustment signal 37 adjusts the gain of the analog front end amplifier 32 so the circuits after it are not saturated and/or have sufficient amplitude for an accurate measurement. The processor has storage, which stores data as well as the programs that control the processor to produce the sensitivity adjustment, the digital heterodyning and filtering and other information signals.

A voltage to current converter 38 receives a DC voltage (DAC Output-1) 42 from processor 36 and produces a sensor output that is a dB output linearly proportional to the amplitude of the heterodyne audio or ultrasound. In an exemplary embodiment the DAC Output-1 is converted to a linear current output with a range of approximately 0.50 mA to 16.30 mA. This range corresponds to a 0 dB to 100 dB change in amplitude of the ultrasound signal received directly from the analog front end 32 or the heterodyned audio. Wider ranges are available. The output signal can also be configured as a scaled output 0 to 25 mA current signal, or a 4 to 20 mA current loop.

The sensor has a feature that allows the processor to digitally heterodyne the ultrasound and digitally filter out the digital audio data. DAC Output-2 44 is the analog audio signal that is reconstructed from the digital audio data from the digital heterodyne process. This process is separate from the analog heterodyning process. There may be some nuances that one heterodyne process may pick up that the other may not. Therefore, both analog and digital heterodyning processes can be made available for maximum flexibility.

In addition to calculating sensitivity, the processor performs fast Fourier transfer (FFT) calculations and/or other digital signal processing algorithms. The processor has a communications output 46 that provides dB and data outputs by means of digital-to-analog converters, communication ports and protocols. The communication output may also provide temperature, and WAV file data for additional external analysis.

The auto sensitivity operation of processor 36 is shown in FIG. 3. At step 50, ultrasound and audio signals are digitized. Then at step 52 the true RMS values of the signals are calculated over a series of samples. Next at step 54 the true RMS values of the signals are converted to dB readings. A decision is made at step 56 as to whether the dB reading is above an upper threshold. If it is not, a determination is made at step 58 as to whether the dB signal is above the lower threshold. If the answer is yes, the reading is valid and is output at step 59 as a valid dB reading. This indicates that there is no need to change the sensitivity adjustment signal.

If at step 56 it is determined that the dB reading is above the upper threshold, the sensitivity signal is reduced by an increment at step 53 and the new value is tested again at step 56 to see if it is still above the upper threshold. Similarly, if in step 58 it is determined that the dB signal is not above the lower threshold, the sensitivity signal is increased by an increment in step 53 and the decisions about being above the upper threshold and below the lower threshold are repeated in steps 56 and 58 until there is no change, indicating that the gain has been adjusted to put the input signal in the operative range. The upper and lower thresholds are adjustable. Typically, the upper threshold is 90% of full scale and the lower threshold is 10% of full threshold. Also, the signal adjustment increments may be adjustable.

Thus, the auto sensitivity adjustment algorithm determines whether the signal is saturating, i.e., above the upper threshold, which can prevent the making of accurate decibel calculations. In such a case the auto sensitivity algorithm calculates a lower sensitivity setting (gain) to bring the ultrasonic signal to within an acceptable working range The processor also calculates a lower sensitivity threshold, which the signal must be above in order to bring the ultrasonic signal to within an acceptable working range. In such a case the auto sensitivity algorithm calculates a higher sensitivity setting to bring the ultrasonic signal up to within an acceptable working range.

The processor monitors the digitized amplitude level of both the ultrasound and the audio and automatically adjusts the sensitivity (the gain) of the analog front end preamplifier if the digitized amplitude level is out of range, i.e., "auto sensitivity adjustment is performed." When the ultrasound and/or the audio are in an acceptable working range the processor calculates the ultrasound amplitude dB value and the audio amplitude dB value.

The sensor has the ability to heterodyne the ultrasound that is fed into the processor's analog to digital converter directly using digital signal processing techniques. These techniques include generation of a configurable carrier signal, performing digital amplitude modulation with the configurable carrier frequency and the digitizing of the amplitude of the ultrasound, and extracting the digital heterodyned audio spectrum "digital audio" produced by the digital AM modulation using low pass digital filtering algorithms.

The sensor provides enhanced signal processing capabilities of the detected ultrasound or heterodyned ultrasound signal, such as spurious glitch detection and/or filtering, fast or slow peak detection, and other advanced pattern recognition capabilities that allows for the detection, processing, and/or reporting of specific events.

The sensor provides enhanced signal processing capabilities for the detected ultrasound or heterodyned ultrasound signal, such as spurious glitch detection and/or filtering, fast or slow peak detection, and other advanced pattern recognition capabilities that allows for the detection, processing, and/or reporting of specific events.

The auto-sensitivity adjustment feature enables users to automatically adjust the sensitivity in a range from 0 dB to 100 dB, and may be 0 dB to 120dB, as opposed to the 40 dB adjustable window of the prior art.

While the present invention has been particularly shown and described with reference to preferred embodiments thereof; it will be understood by those skilled in the art that various changes in form and details may be made therein without departing from the scope of the invention as defined by the appended claims, and that the embodiments are merely illustrative of the invention, which is limited only by the appended claims. In particular, the foregoing detailed description illustrates the invention by way of example and not by way of limitation. The description enables one skilled in the art to make and use the present invention, and describes several embodiments, adaptations, variations, and method of uses of the present invention.

## Claims

1. An automatic sensitivity adjusting analog ultrasonic sensor (20) comprising:
an ultrasonic transducer (30) that converts ultrasonic vibrations into ultrasonic electrical signals;
a front end amplifier (32) with an adjustable gain that receives the ultrasonic signal from the transducer and amplifies it by a variable gain;
a processor (36) that generates a carrier signal; and
a heterodyning circuit (34) that combines the carrier signal and the amplified ultrasonic signal from the amplifier to form a modulated signal spectrum from which an audio spectrum signal is generated;
wherein the processor monitors the amplitude level of the audio spectrum signal and executes an auto sensitivity adjustment algorithm that automatically adjusts the sensitivity, i.e. the gain, of the analog front end amplifier down if the amplitude is above a preset upper threshold or up if the amplitude is below a preset lower threshold.

2. The automatic sensitivity adjusting analog ultrasonic sensor of claim 1 wherein the front end amplifier sends the ultrasonic signal to the processor and the processor digitally heterodynes and filters the ultrasonic signal into a digital audio spectrum signal, and
wherein the processor separately monitors the amplitude level of the ultrasound signal, the audio spectrum signal and the digital audio spectrum signal of the processor and automatically adjusts the sensitivity, i.e. the gain, of the analog front end amplifier down if any of the amplitudes is above a preset upper threshold or up if any of the amplitudes is below a preset lower threshold; and
wherein both the analog audio spectrum signal and digital audio spectrum signal are made available.

3. An automatic sensitivity adjusting analog ultrasonic sensor (20) comprising:
an ultrasonic transducer (30) that converts ultrasonic vibrations into ultrasonic electrical signals;
a front end amplifier (32) with an adjustable gain that receives the ultrasonic signal from the transducer and amplifies it by a variable gain;
a processor (36) that receives the amplified ultrasonic signal from the variable gain front end amplifier and receives an audio signal equivalent to the ultrasonic signal, but shifted in frequency to an audio range, and wherein the processor monitors amplitudes of the amplified ultrasonic signal and the audio signal, based on the monitored amplitudes the processor executes an auto sensitivity adjustment algorithm to automatically create a signal that adjusts the gain of the front end amplifier down in increments if the amplitude is above a preset upper threshold or up in increments if the amplitude is below a preset lower threshold and makes no adjustment if the amplitude is between the thresholds so that the amplified ultrasonic signal from the variable gain front end amplifier can vary between the thresholds.

4. A automatic sensitivity adjusting analog ultrasonic sensor (20) comprising:
an ultrasonic transducer (30) that converts ultrasonic vibrations into ultrasonic electrical signals;
a front end amplifier (32) with an adjustable gain that receives the ultrasonic signal from the transducer and amplifies it by a variable gain; and
a processor (36) that receives the amplified ultrasonic signal from amplifier and digitally heterodynes and filters the amplified ultrasonic signal to produce a digital audio spectrum signal, and wherein the processor monitors the amplitude level of the digital audio spectrum signal and executes an auto sensitivity adjustment algorithm to automatically adjusts the sensitivity, i.e. the gain, of the analog front end amplifier down if the amplitude is above a preset upper threshold or up if the amplitude is below a preset lower threshold.

5. The automatic sensitivity adjusting analog ultrasonic sensor of claim 1 wherein the heterodyning circuit includes a low pass digital filter algorithm for extracting the audio spectrum from the modulated signal spectrum.

6. The automatic sensitivity adjusting analog ultrasonic sensor of claim 1 wherein the processor generates a DC voltage, i.e. DAC Output-1, related to the amplitude of the heterodyne audio or ultrasound signals and further including a voltage to current converter that receives the DAC Output 1 and produces a sensor output that is a dB output linearly proportional to the amplitude of the heterodyne audio or ultrasound signals.

7. The automatic sensitivity adjusting analog ultrasonic sensor of claim 6 wherein the DAC Output-1 is converted to a linear current output with a range of approximately 0.50 mA to 16.30 mA, which corresponds to a 0 dB to 100 dB change in amplitude of the ultrasound signal received directly from the analog front end and the heterodyned audio.

8. The automatic sensitivity adjusting analog ultrasonic sensor of claim 7 wherein the output of the voltage to current converter is a scaled output of 0 to 25mA current or a 4 to 20mA current loop.

9. The automatic sensitivity adjusting analog ultrasonic sensor of claim 4 wherein the processor generates an output DC voltage, i.e. DAC Output-2, related to the digital heterodyne signal.

10. The automatic sensitivity adjusting analog ultrasonic sensor of claim 1 wherein the processor performs fast Fourier transform, i.e. FFT, calculations and/or other digital signal processing algorithms that are made available at its output, and the processor further has a communications output that provides dB and data outputs by means of digital-to-analog converters, communication ports and protocols.

11. The automatic sensitivity adjusting analog ultrasonic sensor of claim 1 wherein the auto sensitivity adjustment algorithm comprises the steps of:
digitizing the ultrasound and audio signals;
calculating the true RMS values of the digitized ultrasound and audio signals over a series of samples;
converting the true RMS values of the signals to dB readings;
a first deciding step to determine whether the dB reading is above an upper threshold, and if it is not, performing a second deciding step to determine whether the dB reading is above the lower threshold and, if it is, determining that the reading is valid and making no change to a sensitivity adjustment signal;
if at the first deciding step it is determined that the dB reading is above an upper threshold, reducing the sensitivity adjustment signal;
if at the second deciding step it is determined that the dB reading is below a lower threshold, increasing the sensitivity adjustment signal; and
after a change in the adjustment signal, subjecting dB reading to the first and second deciding steps again until there is no change.

12. The automatic sensitivity adjusting analog ultrasonic sensor of claim 11 wherein the upper and lower thresholds are adjustable and the reducing and increasing of the sensitivity adjustment signal is in increments that are adjustable.

13. The automatic sensitivity adjusting analog ultrasonic sensor of claim 3 wherein the auto sensitivity adjustment algorithm comprises the steps of:
digitizing the ultrasound and audio signals;
calculating the true RMS values of the digitized ultrasound and audio signals over a series of samples;
converting the true RMS values of the signals to dB readings;
a first deciding step to determine whether the dB reading is above an upper threshold, and if it is not, performing a second deciding step to determine whether the dB reading is above the lower threshold and, if it is, determining that the reading is valid and making no change to a sensitivity adjustment signal;
if at the first deciding step it is determined that the dB reading is above an upper threshold, reducing the sensitivity adjustment signal;
if at the second deciding step it is determined that the dB reading is below a lower threshold, increasing the sensitivity adjustment signal; and
after a change in the adjustment signal, subjecting dB reading to the first and second deciding steps again until there is no change.

14. The sensitivity adjusting analog ultrasonic sensor of claim 4 wherein the auto sensitivity adjustment algorithm comprises the steps of:
digitizing the ultrasound and audio signals;
calculating the true RMS values of the digitized ultrasound and audio signals over a series of samples;
converting the true RMS values of the signals to dB readings;
a first deciding step to determine whether the dB reading is above an upper threshold, and if it is not, performing a second deciding step to determine whether the dB reading is above the lower threshold and, if it is, determining that the reading is valid and making no change to a sensitivity adjustment signal;
if at the first deciding step it is determined that the dB reading is above an upper threshold, reducing the sensitivity adjustment signal;
if at the second deciding step it is determined that the dB reading is below a lower threshold, increasing the sensitivity adjustment signal; and
after a change in the adjustment signal, subjecting dB reading to the first and second deciding steps again until there is no change.

15. The sensitivity adjusting analog ultrasonic sensor of claim 1 wherein the processor analyzes the ultrasound or heterodyned ultrasound signal to perform spurious glitch detection and/or filtering, fast or slow peak detection, and other advanced pattern recognition capabilities that allow for the detection, processing, and/or reporting of specific events.

## Patentansprüche

1. Automatischer empfindlichkeitsanpassender analoger Ultraschallsensor (20), umfassend:
einen Ultraschallwandler (30), der Ultraschallschwingungen in elektrische Ultraschallsignale umwandelt;
einen Frontend-Verstärker (32) mit einer anpassbaren Verstärkung, der das Ultraschallsignal vom Wandler empfängt und es mit einer variablen Verstärkung verstärkt;
einen Prozessor (36), der ein Trägersignal erzeugt; und
eine Heterodynschaltung (34), die das Trägersignal und das verstärkte Ultraschallsignal vom Verstärker kombiniert, um ein moduliertes Signalspektrum zu bilden, aus dem ein Audiospektrumsignal erzeugt wird;
wobei der Prozessor den Amplitudenpegel des Audiospektrumsignals überwacht und einen Algorithmus zur automatischen Empfindlichkeitsanpassung ausführt, der die Empfindlichkeit, d. h., die Verstärkung, des analogen Frontend-Verstärkers automatisch nach unten anpasst, wenn die Amplitude über einer voreingestellten oberen Schwelle liegt, oder nach oben anpasst, wenn die Amplitude unter einer voreingestellten oberen Schwelle liegt.

2. Automatischer empfindlichkeitsanpassender analoger Ultraschallsensor nach Anspruch 1,
wobei der Frontend-Verstärker das Ultraschallsignal an den Prozessor sendet und der Prozessor das Ultraschallsignal digital in ein digitales Audiospektrumsignal heterodyniert und filtert, und
wobei der Prozessor den Amplitudenpegel des Ultraschallsignals, des Audiospektrumsignals und des digitalen Audiospektrumsignals des Prozessors separat überwacht und die Empfindlichkeit, d. h., die Verstärkung, des analogen Frontend-Verstärkers automatisch nach unten anpasst, wenn irgendeine der Amplituden über einer voreingestellten oberen Schwelle liegt, oder nach oben anpasst, wenn irgendeine der Amplituden unter einer voreingestellten oberen Schwelle liegt; und
wobei sowohl das analoge Audiospektrumsignal als auch das digitale Audiospektrumsignal verfügbar gemacht werden.

3. Automatischer empfindlichkeitsanpassender analoger Ultraschallsensor (20), umfassend:
einen Ultraschallwandler (30), der Ultraschallschwingungen in elektrische Ultraschallsignale umwandelt;
einen Frontend-Verstärker (32) mit einer anpassbaren Verstärkung, der das Ultraschallsignal vom Wandler empfängt und es mit einer variablen Verstärkung verstärkt;
einen Prozessor (36), der das verstärkte Ultraschallsignal vom Frontend-Verstärker mit variabler Verstärkung empfängt und ein Audiosignal äquivalent zu dem Ultraschallsignal, aber in der Frequenz in einen Audiobereich verschoben, empfängt, und wobei der Prozessor Amplituden des verstärkten Ultraschallsignals und des Audiosignals überwacht, basierend auf den überwachten Amplituden der Prozessor einen Algorithmus zur automatischen Empfindlichkeitsanpassung ausführt, um automatisch ein Signal zu erzeugen, das die Verstärkung des Frontend-Verstärkers in Inkrementen nach unten anpasst, wenn die Amplitude über einer voreingestellten oberen Schwelle liegt, oder in Inkrementen nach oben anpasst, wenn die Amplitude unter einer voreingestellten unteren Schwelle liegt, und keine Anpassung vornimmt, wenn die Amplitude zwischen den Schwellen liegt, sodass das verstärkte Ultraschallsignal vom Frontend-Verstärker mit variabler Verstärkung zwischen den Schwellen variieren kann.

4. Automatischer empfindlichkeitsanpassender analoger Ultraschallsensor (20), umfassend:
einen Ultraschallwandler (30), der Ultraschallschwingungen in elektrische Ultraschallsignale umwandelt;
einen Frontend-Verstärker (32) mit einer anpassbaren Verstärkung, der das Ultraschallsignal vom Wandler empfängt und es mit einer variablen Verstärkung verstärkt; und
einen Prozessor (36), der das verstärkte Ultraschallsignal vom Verstärker empfängt und das verstärkte Ultraschallsignal digital heterodyniert und filtert, um ein digitales Audiospektrumsignal zu erzeugen, und wobei der Prozessor den Amplitudenpegel des digitalen Audiospektrumsignals überwacht und einen Algorithmus zur automatischen Empfindlichkeitsanpassung ausführt, um die Empfindlichkeit, d. h., die Verstärkung, des analogen Frontend-Verstärkers automatisch nach unten anzupassen, wenn die Amplitude über einer voreingestellten oberen Schwelle liegt, oder nach oben anzupassen, wenn die Amplitude unter einer voreingestellten unteren Schwelle liegt.

5. Automatischer empfindlichkeitsanpassender analoger Ultraschallsensor nach Anspruch 1,
wobei die Heterodynschaltung einen digitalen Tiefpassfilteralgorithmus zum Extrahieren des Audiospektrums aus dem modulierten Signalspektrum beinhaltet.

6. Automatischer empfindlichkeitsanpassender analoger Ultraschallsensor nach Anspruch 1,
wobei der Prozessor eine DC-Spannung, d. h. DAC-Ausgang-1, bezüglich der Amplitude der heterodynen Audio- oder Ultraschallsignale erzeugt und ferner einen Spannung-zu-Strom-Wandler beinhaltet, der den DAC-Ausgang-1 empfängt und einen Sensorausgang erzeugt, der ein dB-Ausgang ist, der linear proportional zu der Amplitude der heterodynen Audio- oder Ultraschallsignale ist.

7. Automatischer empfindlichkeitsanpassender analoger Ultraschallsensor nach Anspruch 6,
wobei der DAC-Ausgang-1 in einen linearen Stromausgang mit einem Bereich von ungefähr 0,50 mA bis 16,30 mA umgewandelt wird, was einer Änderung von 0 dB bis 100 dB der Amplitude des Ultraschallsignals, das direkt vom analogen Frontend empfangen wird, und des heterodynierten Audios entspricht.

8. Automatischer empfindlichkeitsanpassender analoger Ultraschallsensor nach Anspruch 7,
wobei der Ausgang des Spannung-zu-Strom-Wandlers ein skalierter Ausgang von 0 bis 25 mA Strom oder eine 4 bis 20 mA Stromschleife ist.

9. Automatischer empfindlichkeitsanpassender analoger Ultraschallsensor nach Anspruch 4,
wobei der Prozessor eine Ausgangs-DC-Spannung, d. h. DAC-Ausgang-2, bezüglich des digitalen heterodynen Signals erzeugt.

10. Automatischer empfindlichkeitsanpassender analoger Ultraschallsensor nach Anspruch 1,
wobei der Prozessor Berechnungen einer schnellen FourierTransformation, d. h. FFT, und/oder andere Digitalsignalverarbeitungsalgorithmen durchführt, die an seinen Ausgängen verfügbar gemacht werden, und der Prozessor ferner einen Kommunikationsausgang aufweist, der dB- und Datenausgänge mittels Digital-Analog-Wandlern, Kommunikationsports und Protokollen bereitstellt.

11. Automatischer empfindlichkeitsanpassender analoger Ultraschallsensor nach Anspruch 1,
wobei der Algorithmus zur automatischen Empfindlichkeitsanpassung die folgenden Schritte umfasst:
Digitalisieren der Ultraschall- und Audiosignale;
Berechnen der wahren RMS-Werte der digitalisierten Ultraschall- und Audiosignale über eine Reihe von Abtastungen;
Umwandeln der wahren RMS-Werte der Signale in dB-Ablesungen;
einen ersten Entscheidungsschritt zum Bestimmen, ob die dB-Ablesung über einer oberen Schwelle liegt, und wenn nicht, Durchführen eines zweiten Entscheidungsschritts zum Bestimmen, ob die dB-Ablesung über der unteren Schwelle liegt, und wenn ja, Bestimmen, dass die Ablesung zulässig ist, und Vornehmen keiner Änderung an einem Empfindlichkeitsanpassungssignal;
wenn beim ersten Entscheidungsschritt bestimmt wird, dass die dB-Ablesung über einer oberen Schwelle liegt, Reduzieren des Empfindlichkeitsanpassungssignals;
wenn beim zweiten Entscheidungsschritt bestimmt wird, dass die dB-Ablesung unter einer unteren Schwelle liegt, Erhöhen des Empfindlichkeitsanpassungssignals; und
nach einer Änderung des Anpassungssignals, erneutes Unterziehen der dB-Ablesung dem ersten und zweiten Entscheidungsschritt, bis es keine Änderung gibt.

12. Automatischer empfindlichkeitsanpassender analoger Ultraschallsensor nach Anspruch 11,
wobei die obere und untere Schwelle anpassbar sind und das Reduzieren und Erhöhen des Empfindlichkeitsanpassungssignals in Inkrementen erfolgt, die anpassbar sind.

13. Automatischer empfindlichkeitsanpassender analoger Ultraschallsensor nach Anspruch 3,
wobei der Algorithmus zur automatischen Empfindlichkeitsanpassung die folgenden Schritte umfasst:
Digitalisieren der Ultraschall- und Audiosignale;
Berechnen der wahren RMS-Werte der digitalisierten Ultraschall- und Audiosignale über eine Reihe von Abtastungen;
Umwandeln der wahren RMS-Werte der Signale in dB-Ablesungen;
einen ersten Entscheidungsschritt zum Bestimmen, ob die dB-Ablesung über einer oberen Schwelle liegt, und wenn nicht, Durchführen eines zweiten Entscheidungsschritts zum Bestimmen, ob die dB-Ablesung über der unteren Schwelle liegt, und wenn ja, Bestimmen, dass die Ablesung zulässig ist, und Vornehmen keiner Änderung an einem Empfindlichkeitsanpassungssignal;
wenn beim ersten Entscheidungsschritt bestimmt wird, dass die dB-Ablesung über einer oberen Schwelle liegt, Reduzieren des Empfindlichkeitsanpassungssignals;
wenn beim zweiten Entscheidungsschritt bestimmt wird, dass die dB-Ablesung unter einer unteren Schwelle liegt, Erhöhen des Empfindlichkeitsanpassungssignals; und
nach einer Änderung des Anpassungssignals, erneutes Unterziehen der dB-Ablesung dem ersten und zweiten Entscheidungsschritt, bis es keine Änderung gibt.

14. Empfindlichkeitsanpassender analoger Ultraschallsensor nach Anspruch 4, wobei der Algorithmus zur automatischen Empfindlichkeitsanpassung die folgenden Schritte umfasst:
Digitalisieren der Ultraschall- und Audiosignale;
Berechnen der wahren RMS-Werte der digitalisierten Ultraschall- und Audiosignale über eine Reihe von Abtastungen;
Umwandeln der wahren RMS-Werte der Signale in dB-Ablesungen;
einen ersten Entscheidungsschritt zum Bestimmen, ob die dB-Ablesung über einer oberen Schwelle liegt, und wenn nicht, Durchführen eines zweiten Entscheidungsschritts zum Bestimmen, ob die dB-Ablesung über der unteren Schwelle liegt, und wenn ja, Bestimmen, dass die Ablesung zulässig ist, und Vornehmen keiner Änderung an einem Empfindlichkeitsanpassungssignal;
wenn beim ersten Entscheidungsschritt bestimmt wird, dass die dB-Ablesung über einer oberen Schwelle liegt, Reduzieren des Empfindlichkeitsanpassungssignals;
wenn beim zweiten Entscheidungsschritt bestimmt wird, dass die dB-Ablesung unter einer unteren Schwelle liegt, Erhöhen des Empfindlichkeitsanpassungssignals; und
nach einer Änderung des Anpassungssignals, erneutes Unterziehen der dB-Ablesung dem ersten und zweiten Entscheidungsschritt, bis es keine Änderung gibt.

15. Empfindlichkeitsanpassender analoger Ultraschallsensor nach Anspruch 1, wobei der Prozessor das Ultraschall- oder heterodynierte Ultraschallsignal analysiert, um Störimpulsdetektion und/oder -filterung, schnelle oder langsame Spitzendetektion und andere fortgeschrittene Mustererkennungsfähigkeiten durchzuführen, die die Detektion, Verarbeitung und/oder Meldung spezifischer Ereignisse ermöglichen.

## Revendications

1. Capteur ultrasonore analogique à réglage automatique de la sensibilité (20), comprenant :
un transducteur ultrasonore (30) qui convertit des vibrations ultrasonores en signaux ultrasonores électriques ;
un amplificateur frontal (32) à gain réglable qui reçoit le signal ultrasonore provenant du transducteur et l'amplifie par un gain variable ;
un processeur (36) qui génère un signal de porteuse ; et un circuit d'hétérodynage (34) qui combine le signal porteur et le signal ultrasonore amplifié provenant de l'amplificateur pour former un spectre de signal modulé à partir duquel un signal de spectre audio est généré ;
dans lequel le processeur surveille le niveau d'amplitude du signal de spectre audio et exécute un algorithme de réglage automatique de la sensibilité qui règle automatiquement la sensibilité, autrement dit le gain, de l'amplificateur frontal analogique en l'abaissant si l'amplitude est au-dessus d'un seuil supérieur prédéfini ou en l'augmentant si l'amplitude est au-dessous d'un seuil inférieur prédéfini.

2. Capteur ultrasonore analogique à réglage automatique de la sensibilité selon la revendication 1 dans lequel l'amplificateur frontal envoie le signal ultrasonore au processeur et le processeur hétérodyne et filtre numériquement le signal ultrasonore en un signal de spectre audio numérique, et
dans lequel le processeur surveille séparément le niveau d'amplitude du signal ultrasonore, le signal de spectre audio et le signal de spectre audio numérique du processeur et règle automatiquement la sensibilité, autrement dit le gain, de l'amplificateur frontal analogique en l'abaissant si l'une quelconque des amplitudes est au-dessus d'un seuil supérieur prédéfini ou en l'augmentant si l'une quelconque des amplitudes est au-dessous d'un seuil inférieur prédéfini ; et
dans lequel le signal de spectre audio analogique et le signal de spectre audio numérique sont mis à disposition.

3. Capteur ultrasonore analogique à réglage automatique de la sensibilité (20), comprenant :
un transducteur ultrasonore (30) qui convertit des vibrations ultrasonores en signaux ultrasonores électriques ;
un amplificateur frontal (32) à gain réglable qui reçoit le signal ultrasonore provenant du transducteur et l'amplifie par un gain variable ;
un processeur (36) qui reçoit le signal ultrasonore amplifié provenant de l'amplificateur frontal à gain variable et reçoit un signal audio équivalent au signal ultrasonore, mais dont la fréquence est décalée vers une plage audio, et le processeur surveillant les amplitudes du signal ultrasonore amplifié et du signal audio ; sur la base des amplitudes surveillées, le processeur exécutant un algorithme de réglage automatique de la sensibilité pour créer automatiquement un signal qui règle le gain de l'amplificateur frontal en l'abaissant par incréments si l'amplitude est au-dessus d'un seuil supérieur prédéfini ou en l'augmentant par incréments si l'amplitude est au-dessous d'un seuil inférieur prédéfini et n'effectuant aucun réglage si l'amplitude est comprise entre les seuils de sorte à permettre au signal ultrasonore amplifié provenant de l'amplificateur frontal à gain variable de varier entre les seuils.

4. Capteur ultrasonore analogique à réglage automatique de la sensibilité (20), comprenant :
un transducteur ultrasonore (30) qui convertit des vibrations ultrasonores en signaux ultrasonores électriques ;
un amplificateur frontal (32) à gain réglable qui reçoit le signal ultrasonore provenant du transducteur et l'amplifie par un gain variable ; et
un processeur (36) qui reçoit le signal ultrasonore amplifié provenant de l'amplificateur et qui hétérodyne et filtre numériquement le signal ultrasonore amplifié pour produire un signal de spectre audio numérique, et le processeur surveillant le niveau d'amplitude du signal de spectre audio numérique et exécutant un algorithme de réglage automatique de la sensibilité pour régler automatiquement la sensibilité, autrement dit le gain, de l'amplificateur frontal analogique en l'abaissant si l'amplitude est au-dessus d'un seuil supérieur prédéfini ou en l'augmentant si l'amplitude est au-dessous d'un seuil inférieur prédéfini.

5. Capteur ultrasonore analogique à réglage automatique de la sensibilité selon la revendication 1 dans lequel le circuit d'hétérodynage comporte un algorithme de filtre numérique passe-bas destiné à extraire le spectre audio du spectre de signal modulé.

6. Capteur ultrasonore analogique à réglage automatique de la sensibilité selon la revendication 1 dans lequel le processeur génère une tension continue, autrement dit DAC Ouput-1, liée à l'amplitude des signaux audio ou ultrasonores hétérodynes et comportant en outre un convertisseur tension-courant qui reçoit la DAC Output-1 et produit une sortie de capteur qui est une sortie en dB linéairement proportionnelle à l'amplitude des signaux audio ou ultrasonores hétérodynes.

7. Capteur ultrasonore analogique à réglage automatique de la sensibilité selon la revendication 6 dans lequel la DAC Output-1 est convertie en une sortie de courant linéaire avec une plage d'environ 0,50 mA à 16,30 mA, ce qui correspond à une variation d'amplitude de 0 dB à 100 dB du signal ultrasonore reçu directement du frontal analogique et de l'audio hétérodynée.

8. Capteur ultrasonore analogique à réglage automatique de la sensibilité selon la revendication 7 dans lequel la sortie du convertisseur tension-courant est une sortie normalisée de courant de 0 à 25 mA ou une boucle de courant de 4 à 20 mA.

9. Capteur ultrasonore analogique à réglage automatique de la sensibilité selon la revendication 4 dans lequel le processeur génère une tension continue de sortie, autrement dit DAC Output-2, liée au signal hétérodyne numérique.

10. Capteur ultrasonore analogique à réglage automatique de la sensibilité selon la revendication 1 dans lequel le processeur réalise des calculs de transformée de Fourier rapide, autrement dit FFT, et/ou d'autres algorithmes de traitement de signaux numériques qui sont mis à disposition à sa sortie, et le processeur possède en outre une sortie de communication qui fournit des sorties en dB et de données au moyen de convertisseurs numériques-analogiques, de ports de communication et de protocoles.

11. Capteur ultrasonore analogique à réglage automatique de la sensibilité selon la revendication 1 dans lequel l'algorithme de réglage automatique de la sensibilité comprend les étapes suivantes :
numérisation des signaux ultrasonores et audio ;
calcul des valeurs efficaces vraies des signaux ultrasonores et audio numérisés sur une série d'échantillons ;
conversion des valeurs efficaces vraies des signaux en indications en dB ;
une première étape de décision pour déterminer si l'indication en dB est au-dessus d'un seuil supérieur et, dans la négative, réalisation d'une deuxième étape de décision pour déterminer si l'indication en dB est au-dessus du seuil inférieur et, dans l'affirmative, détermination que l'indication est valide et qu'aucune modification ne doit être apportée à un signal de réglage de la sensibilité ;
si, à la première étape de décision, il est déterminé que l'indication en dB est au-dessus d'un seuil supérieur, réduction du signal de réglage de la sensibilité ;
si, à la deuxième étape de décision, il est déterminé que l'indication en dB est au-dessous d'un seuil inférieur, augmentation du signal de réglage de la sensibilité ; et
à la suite d'une modification apportée au signal de réglage, application une nouvelle fois des première et deuxième étapes de décision à l'indication en dB jusqu'à ce qu'aucune modification ne soit nécessaire.

12. Capteur ultrasonore analogique à réglage automatique de la sensibilité selon la revendication 11 dans lequel les seuils supérieur et inférieur sont réglables et la réduction et l'augmentation du signal de réglage de la sensibilité se font par incréments réglables.

13. Capteur ultrasonore analogique à réglage automatique de la sensibilité selon la revendication 3 dans lequel l'algorithme de réglage automatique de la sensibilité comprend les étapes suivantes :
numérisation des signaux ultrasonores et audio ;
calcul des valeurs efficaces vraies des signaux ultrasonores et audio numérisés sur une série d'échantillons ;
conversion des valeurs efficaces vraies des signaux en indications en dB ;
une première étape de décision pour déterminer si l'indication en dB est au-dessus d'un seuil supérieur et, dans la négative, réalisation d'une deuxième étape de décision pour déterminer si l'indication en dB est au-dessus du seuil inférieur et, dans l'affirmative, détermination que l'indication est valide et qu'aucune modification ne doit être apportée à un signal de réglage de la sensibilité ;
si, à la première étape de décision, il est déterminé que l'indication en dB est au-dessus d'un seuil supérieur, réduction du signal de réglage de la sensibilité ;
si, à la deuxième étape de décision, il est déterminé que l'indication en dB est au-dessous d'un seuil inférieur, augmentation du signal de réglage de la sensibilité ; et à la suite d'une modification apportée au signal de réglage, application une nouvelle fois des première et deuxième étapes de décision à l'indication en dB jusqu'à ce qu'aucune modification ne soit nécessaire.

14. Capteur ultrasonore analogique à réglage de la sensibilité selon la revendication 4, dans lequel l'algorithme de réglage automatique de la sensibilité comprend les étapes suivantes :
numérisation des signaux ultrasonores et audio ;
calcul des valeurs efficaces vraies des signaux ultrasonores et audio numérisés sur une série d'échantillons ;
conversion des valeurs efficaces vraies des signaux en indications en dB ;
une première étape de décision pour déterminer si l'indication en dB est au-dessus d'un seuil supérieur et, dans la négative, réalisation d'une deuxième étape de décision pour déterminer si l'indication en dB est au-dessus du seuil inférieur et, dans l'affirmative, détermination que l'indication est valide et qu'aucune modification ne doit être apportée à un signal de réglage de la sensibilité ;
si, à la première étape de décision, il est déterminé que l'indication en dB est au-dessus d'un seuil supérieur, réduction du signal de réglage de la sensibilité ;
si, à la deuxième étape de décision, il est déterminé que l'indication en dB est au-dessous d'un seuil inférieur, augmentation du signal de réglage de la sensibilité ; et
à la suite d'une modification apportée au signal de réglage, application une nouvelle fois des première et deuxième étapes de décision à l'indication en dB jusqu'à ce qu'aucune modification ne soit nécessaire.

15. Capteur ultrasonore analogique à réglage de la sensibilité selon la revendication 1, dans lequel le processeur analyse le signal ultrasonore ou ultrasonore hétérodyné pour réaliser une détection et/ou un filtrage de perturbations transitoires parasites, une détection des pics rapides ou lents, et d'autres fonctions avancées de reconnaissance des formes qui permettent la détection, le traitement et/ou le signalement d'événements spécifiques.
